# FASCICULE DE BREVET EUROPEEN

(11) **EP 0 650 276 B1**
(45) Date de publication et mention de la délivrance du brevet: **24.04.2002**
(21) Numéro de dépôt: 94402352.2
(22) Date de dépôt: 19.10.1994
(51) Int. Cl.: H04L 1/00, H04Q 11/04

(54) **Appareil de test de réseau de télécommunication de type ATM et de mesure de performance de connexion ATM**
Prüfungsgerät für ATM Telekommunikationsnetze und Messung der Qualität einer ATM Verbindung
Test apparatus for ATM telecommunication networks and ATM connection quality measure

(30) Priorité: 20.10.1993 FR 9312521
(43) Date de publication de la demande: 26.04.1995
(73) Titulaire: FRANCE TELECOM, 75015 Paris (FR)
(72) Inventeur: Tremel, Jean-Yves, F-94230 Cachan (FR); Garandel, René, F-94230 Cachan (FR)
(74) Mandataire: Schmit, Christian Norbert Marie

(56) Documents cités:
- EP-A- 0 393 351
- EP-A- 0 520 580
- IEICE TRANSACTIONS ON COMMUNICATIONS, vol.E76-B, no.3, Mars 1993, TOKYO,JP; pages 280 - 290, XP304001 S.OHTA ET AL 'Applying OSI systems management standards to remotely controlled virtual path testing in ATM networks'
- 6TH MEDITERRANEAN ELECTROTECHNICAL CONFERENCE, vol.1, Mai 1991, LJUBLJANA,YUGOSLAVIA; pages 501 - 504, XP289503 G.I.STASSINOPOULOS ET AL 'REAL TIME TESTING OF ADAPTATION LAYER IN IBCN'

## Description

L'invention concerne un appareil de test de réseau de télécommunication de type ATM et de mesure de performance de connexion ATM. On rappelle qu'un réseau de télécommunication ATM (Asynchronus Transfert Mode) permet la transmission d'informations numériques ayant des débits variés et pouvant être importants, ces débits pouvant en effet aller jusqu'à 155 Mbits par seconde et même au-delà.

La transmission en mode ATM se fait par transfert de blocs d'informations de longueur constante. La quantité élémentaire d'informations utile transmises est de 48 octets, le bloc d'information transmis en ATM est dénommé "cellule" et identifié par une étiquette de 5 octets appelée "en-tête". La longueur totale d'une cellule est donc de 53 octets.

La technique de transmission en mode ATM est basée sur la mise en cellule de l'information, le réseau de transfert se chargeant de commuter, multiplexer et transmettre ces cellules.

Le réseau de transfert est un réseau de brassage ou de commutation utilisant le mode de transmission ATM et ne gérant pas directement la communication de base, mise sous forme de cellules, mais un groupe de communications multiplexées dans un faisceau de cellules.

Outre la fonction transfert, le réseau se charge de générer et terminer ces faisceaux dans des multiplexeurs de service ou de réseau.

Enfin, le réseau met à profit l'indépendance du mode de transfert asynchrone (couche ATM) avec les systèmes de transmission pour utiliser le réseau plésiochrone et le réseau synchrone (couche physique).

Les paramètres de qualité d'une connexion ATM ont été définis dans la recommandation I356 du CCITT.

A partir de cette définition des paramètres, le déposant a été amené à définir deux types d'outils nécessaires au test des éléments de réseau et à la mesure des performances du réseau :
- un outil de test des fonctionnalités ATM dont le rôle est de mesurer les performances d'une connexion donnée en simulant des conditions de charge sur les autres. Pour cela il est prévu des mécanismes de tests pour les différentes couches du protocole :
   ATM, AAL (ATM adaptation Layer). Il est prévu également de simuler également l'influence de la couche physique par génération d'erreurs de configuration commandée, etc..., et de générer l'influence de la couche ATM en générant des phénomènes de gigue, des phénomènes d'insertion ou de perte de cellules.

Le deuxième outil est un outil de tests des fonctions d'exploitation permettant de valider des capacités des équipements et du réseau, à remplir les fonctions spécifiées : interface, maintenance, signalisation.

L'article de S.Ohta et al. "Applying OSI systems management standards to remotely controlled virtual path testing in ATM networks", paru dans IEICE TRANSACTIONS ON COMMUNICATIONS, vol.E76-B, no.3, Mars 1993, TOKYO,JP; pages 280 - 290, mentionne de façon générale le principe du test de conduits virtuels à I' aide de cellules de test.

Il n'y a, à ce jour, cependant, aucun appareil permettant de mesurer les paramètres de performance d'un réseau ATM et de tester des fonctions d'exploitation du réseau.

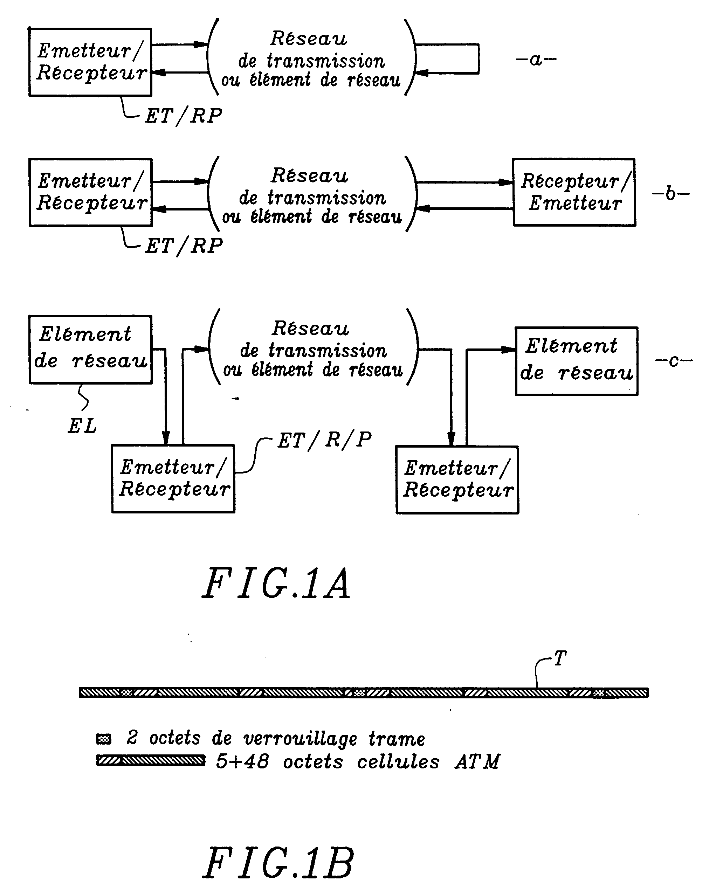

Le problème qu'a cherché à résoudre le déposant répond à un besoin nouveau consistant à mettre au point un appareil de tests et de mesure ATM pour la mise en service d'une connexion ATM que ce soit au niveau du test de l'élément de réseau ou de la mesure de performance du réseau. Selon un aspect de l'invention, l'appareil de mesure se compose d'un ou de deux équipements. L'appareil de mesure comporte un équipement lorsque les tests de réseau sont réalisés en boucle, tels que représentés sur la figure 1Aa. Il comporte deux équipements lorsque les tests sont réalisés en point à point entre deux centres distants tels que représentés sur la figure 1Ab. Un seul équipement est utilisé pour des fonctions de monitoring sur la figure 1Ac. Pour faciliter la description par la suite, on considérera que l'appareil de mesure comprend deux équipements, un émetteur et un récepteur-analyseur appelé par la suite récepteur.

Dans ce but, l'invention a pour objet un appareil de test de réseau et/ou d'élément de réseau de télécommunication de type ATM et de mesure de performance de connexion du réseau, ce réseau véhiculant des informations sous la forme de cellules conforme à la norme ATM caractérisé en ce qu'il comprend :
A. un émetteur muni :
   a) - d'un ensemble d'élaboration de conduit physique, cet ensemble comprenant :
      - des moyens d'embrouillage des cellules,
      - des moyens de génération de code correcteurs d'erreurs,
      - des moyens de génération de cellules de maintenance,
      - des moyens d'insertion d'erreurs;
   b) - d'un ensemble d'élaboration de la couche de transport ATM organisée en chemin virtuel, voie virtuelle (VP/VC) comprenant :
      - des moyens de génération du flux de cellules utilisateurs incluant des cellules de mesure et des cellules de charge,
      - des moyens de formation d'un flux de cellules à partir des cellules générées par multiplexage temporel sur plusieurs niveaux organisés en A circuits virtuels et voies virtuelles de mesure et B circuits virtuels et voies virtuelles de charge;
   B. Un récepteur muni d'un ensemble de traitement des signaux de la couche physique comprenant :
      - des moyens de détection de manque de signal, de perte de signaux de synchronisation trame et de perte de signaux de synchronisation cellule;
   b) - d'un ensemble de traitement du flux de cellules de la couche de transport ATM comprenant :
      - des moyens de désembrouillage et de cadrage de cellules,
      - des moyens de reconnaissance de cellules utilisateur,
      - des moyens de reconnaissance de cellules de mesure,
      - des moyens de mesure de performance (cellules érronées, perdues, insérées, gigues) et de stockage de cellules.

L'émetteur comporte aussi des moyens de formation d'une trame composée de N octets dont (N-M) octets d'informations et M octets de verrouillage de trame.

Les moyens de formation de trame comportent un compteur permettant de réaliser une horloge à trou (HTR) pour l'insertion des M octets de verrouillage de trame tous les N octets.

Les moyens de formation de trame comportent en outre des moyens de transformation parallèle-série pour émettre les octets formant les cellules sous la forme série et un encodeur permettant de coder les bits série pour les émettre sur la ligne de transmission du réseau.

Les moyens d'embrouillage des cellules sont réalisés par un embrouilleur synchrone en x³¹, les octets de verrouillage de trame n'étant pas embrouillés.

Les moyens d'élaboration du conduit physique comportent des moyens d'insertion de cellules vides.

Les moyens de calcul de code correcteur d'erreur, les moyens d'embrouillage et les moyens d'insertion de cellules vides sont réalisés par un circuit à réseau de cellules logiques programmable.

Les moyens permettant la génération de flux de cellules de mesure et de charge comprennent une mémoire programmable contenant un premier ensemble de blocs chaque bloc contenant les octets d'en-tête et d'informations des cellules de charge et un deuxième ensemble contenant les en-têtes des cellules de mesure.

Les moyens de génération du flux de cellules de mesure et de charge comprennent en outre un compteur dont la valeur est répétée dans chaque octet d'une cellule, le compteur étant incrémenté de 1 à chaque nouvelle cellule à générer.

Les moyens de génération du flux de cellules ATM comprennent en outre des moyens de génération du trafic.

Les moyens de génération de trafic peuvent comporter une mémoire programmable dans laquelle chaque bit correspond à une cellule de la trame et dont l'état 0 ou 1 va permettre ou non de commander l'émission d'une cellule de mesure.

Les moyens de programmation de trafic peuvent comporter une mémoire programmable dans laquelle chaque octet correspond à une distance entre deux cellules de mesures.

Les moyens de génération de cellules de maintenance (F3) comportent :
- une base de temps pour obtenir des signaux de synchronisation d'octets, de synchronisation de blocs et de synchronisation de cellules F3 permettant l'émission périodique et forcée d'une cellule de maintenance F3 toutes les NIC cellules émises,
- des moyens de génération de l'en-tête des cellules de maintenance et du champ d'information.

Le récepteur comporte des moyens de verrouillage de trame et de transformation série parallèle.

Les moyens de verrouillage de trame comportent un circuit de décodage de trame comprenant un décodeur permettant d'obtenir un signal binaire, un convertisseur série-parallèle, un décaleur, un automate de verrouillage de trame et un comparateur de mots de verrouillage de trame.

Les moyens de reconnaissance de cellules de mesure comportent des comparateurs permettant de comparer les cellules utilisateurs reçues aux en-têtes des cellules de mesure.

Les moyens de mesure de performance et de stockage comportent un ensemble de traitement des cellules de mesure apte à compter les cellules insérés et perdues et le nombre d'erreurs détectées sur les cellules erronées.

Le récepteur comporte en outre une mémoire permettant de lire en temps réel les résultats de mesure, de les stocker en mémoire de masse et d'analyser le trafic reçu.

La mémoire permet de stocker les cellules reçues en les filtrant si nécessaire en vue d'un traitement différé (analyse de protocole, maintenance).

D'autres particularités et avantages de l'invention apparaîtront à la lecture de la description suivante qui est faite à titre illustratif en regard des dessins sur lesquels
- la figure 1A représente les trois configurations de test possible au moyen de l'appareil de test conforme à l'invention;
- la figure 1B représente le schéma de l'organisation des données sous la forme d'une trame à 34 Mbit/s;
- la figure 2A représente le schéma de principe de l'émetteur conforme à l'invention;
- la figure 2B représente le schéma d'un récepteur conforme à l'invention;
- la figure 3 représente les moyens de formation d'une trame selon l'invention;
- la figure 4 représente un ensemble d'élaboration du conduit physique selon l'invention;
- la figure 5 représente les moyens de génération de cellules de maintenance;
- la figure 6 représente les moyens de génération du trafic;
- la figure 7 représente la relation entre la mémoire de la figure 6 et le signal de mesure HM généré;
- la figure 8 représente les moyens de génération du flux utilisateur;
- la figure 9 représente le schéma des moyens de décodage de la trame;
- la figure 10 représente le schéma de réalisation des moyens de désembrouillage, de cadrage et de reconnaissance des cellules;
- la figure 11 représente le schéma de réalisation des moyens de reconnaissance des cellules de mesure;
- la figure 12 représente le schéma de réalisation des moyens de mesure de performance et de stockage de cellules.

L'appareil qui va être décrit dans la suite vise à répondre à un nouveau besoin à savoir le test et la mesure de paramètres de performance d'un réseau de télécommunication de type ATM pour la mise en service d'une connexion de type ATM.

Cet appareil de mesure se compose d'un ou de deux équipements conformément à l'invention. L'appareil sera composé d'un équipement lorsque les tests du réseau sont réalisés en boucle comme l'illustre la figure 1Aa. L'appareil se composera de deux équipements lorsque les tests sont réalisés en point à point entre deux centres distants tels que représentés sur les figures 1Ab et 1Ac.

Les cellules formant le flux projeté sur le réseau peuvent être organisées en trames comme le montre le schéma de la figure 1B. La projection des cellules sur le réseau, que ces cellules soient organisées en trame ou non se fait par l'intermédiaire d'une interface normalisée qui permet d'obtenir le débit désiré. Ce débit peut être un débit de 34 Mbit/s ou de 255 Mbit/s.

Dans la suite de la description on a choisi à titre d'exemple une interface à 34 Mbit/S.

Comme cela a déjà été préciser la norme ATM permet un multiplexage temporel à plusieurs niveaux en organisant les flux de cellules en conduit virtuel VP ("Virtual Path") et voie virtuelle VC ("Virtual Channel"). Ainsi toutes les cellules ATM peuvent être affectées à un conduit virtuel VP parmi 4096 et à une voie virtuelle VC parmi 65536. Les numéros de conduit et de la voie virtuelle de la cellule sont contenus dans des champs respectivement de 12 et 16 bits de l'en-tête. Ainsi un en-tête de 5 octets dont les bits sont numérotés de O à 7 contient le numéro de conduit virtuel VPI défini sur 12 bits, le numéro de voie virtuelle VCI défini sur 16 bits, un indicateur de type de cellules PT ("Payload type") défini sur trois bits, un indicateur de priorité CLP ("Cell Loss Priority") défini sur 1 bit ainsi qu'un code correcteur d'erreurs HEC défini sur 8 bits et portant sur les 4 octets précédents.

L'en-tête est suivi de 48 octets d'informations réservés au données utiles.

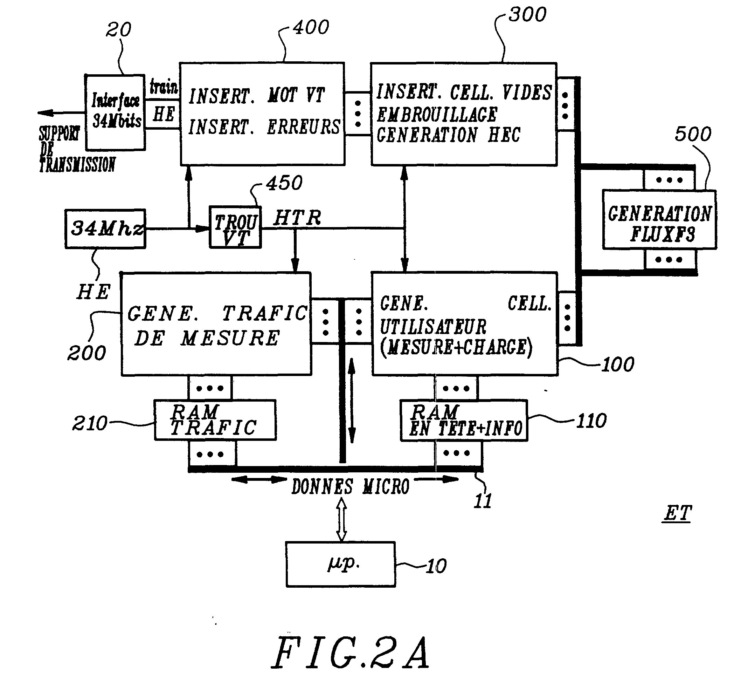

On va se reporter maintenant au schéma général de la partie émetteur ET de l'appareil représenté sur la figure 2A. L'ensemble des traitements portant sur les données reçues est géré par une unité de traitement 10 réalisée au moyen d'un microprocesseur.

La partie émetteur comporte en outre une interface 20 de connexion au support de transmission. Elle comporte des moyens de génération de cellules utilisateurs 100 permettant de générer des cellules de mesure et des cellules de charge ces moyens étant associés à une mémoire 110 de type RAM dans laquelle a été enregistré le contenu des cellules à générer.

L'émetteur comprend également des moyens de génération de trafic de mesure 200 associé à une mémoire 210 de type RAM dont la lecture permet soit d'envoyer un signal de commande d'émission d'une cellule de mesure soit une donnée dont la valeur correspond à la distance entre deux cellules de mesure.

Les mémoires 210 et 110 sont des mémoires RAM à double accès.

L'émetteur comprend en outre des moyens 300 d'insertion de cellules vides d'embrouillage et de génération de codes correcteurs d'erreurs et des moyens 400 d'insertion de mots de verrouillage de trame et d'insertion d'erreurs. Il comporte également des moyens de 500 de génération du flux de maintenance F3.

Les moyens d'insertion du mot de verrouillage de trame 400 sont associés à une logique 450 qui permet d'obtenir un signal d'horloge HTR dénommé dans la suite horloge à trou, dont le trou dure le temps du verrouillage de trame.

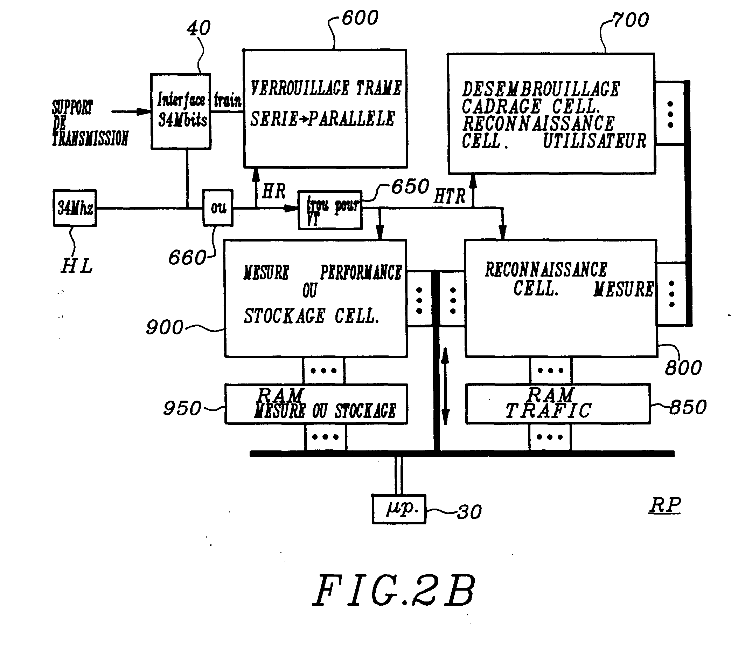

La figure 2B représente le schéma des différents ensembles formant le récepteur RP conformément à l'invention. Le récepteur est équipé d'une horloge locale HL permettant d'obtenir un signal d'horloge de réception HR ayant la même fréquence que l'horloge d'émission c'est à dire dans le cas de l'exemple décrit l'horloge HR est égale à 34 Mhz. Le récepteur est également équipé d'une interface de réception 40 pour permettre la connexion au réseau ATM; l'interface étant réalisé par un circuit existant normalisé.

Le récepteur comporte une unité de traitement et de gestion 30 de l'ensemble des signaux. Cette unité est du type microprocesseur, et est en pratique réalisée par la même unité de traitement que celle qui est placée dans le récepteur.

Il s'agit à titre d'exemple d'un microprocesseur 68030 utilisant un système d'exploitation temps réel 0S9. Le récepteur comporte en outre un ensemble 600 de verrouillage de trame et de transformation série parallèle du train de données issu de l'interface 40. Le récepteur comporte également un ensemble 800 de désembrouillage, de cadrage et de reconnaissance de cellules utilisateurs. Le récepteur est également muni d'un ensemble de reconnaissance des cellules de mesure 800 associé à des moyens de mémorisation du trafic 850. Le récepteur comporte en outre des moyens de mesure de performance ou de stockage des cellules 900 associés à des moyens de mémorisation de mesure 950.

Les moyens de verrouillage de trame 600 sont associés à une logique qui permet d'obtenir le signal d'horloge de réception HR. Un autre circuit logique 650 permet d'obtenir un signal d'horloge de verrouillage de trame HTR.

**On va maintenant décrire plus en détail les** **différents ensembles formant l'émetteur d'une part puis le récepteur.**

Mais tout d'abord on précise que selon l'invention l'émetteur va permettre d'envoyer un flux de cellules répondant à la norme ATM, incluant des cellules vides et des cellules utilisateurs et des cellules de maintenance dénommées F3 et F4. Les cellules utilisateurs sont toutes les cellules émises (ou reçues) pour la couche ATM, c'est à dire toutes les cellules transférées sur la ligne hors cellules vides-cellules de maintenance.

Les cellules utilisateur comprennent;
- des cellules de mesure : cellules d'information permettant de mesurer le réseau de transfert ATM. Un compteur 8 bits incrémenté à chaque cellule de mesure est utilisé pour charger les 48 octets d'information des cellules de mesure;

Contenu :
VPi (Virtual Path) sur 12 bits
VCI (Virtual Channel) sur 16 bits
PT (Payload type) sur 3 bits
CLP (Cell Loss Priority) sur 1 bit
HEC (Header Error Corrector) sur 8 bits et 48 fois le même octet.
   - des cellules de charge : cellules d'information utilisées pour charger l'accès au réseau. Le contenu des 48 octets d'information des cellules de charge provient de la mémoire RAM 110.

Contenu :
VPi sur 12 bits
VCI sur 16 bits
PT sur 3 bits
CLP sur 1 bit
HEC sur 8 bits
et 48 octets provenant de la mémoire.

### Description de la partie émetteur ET.

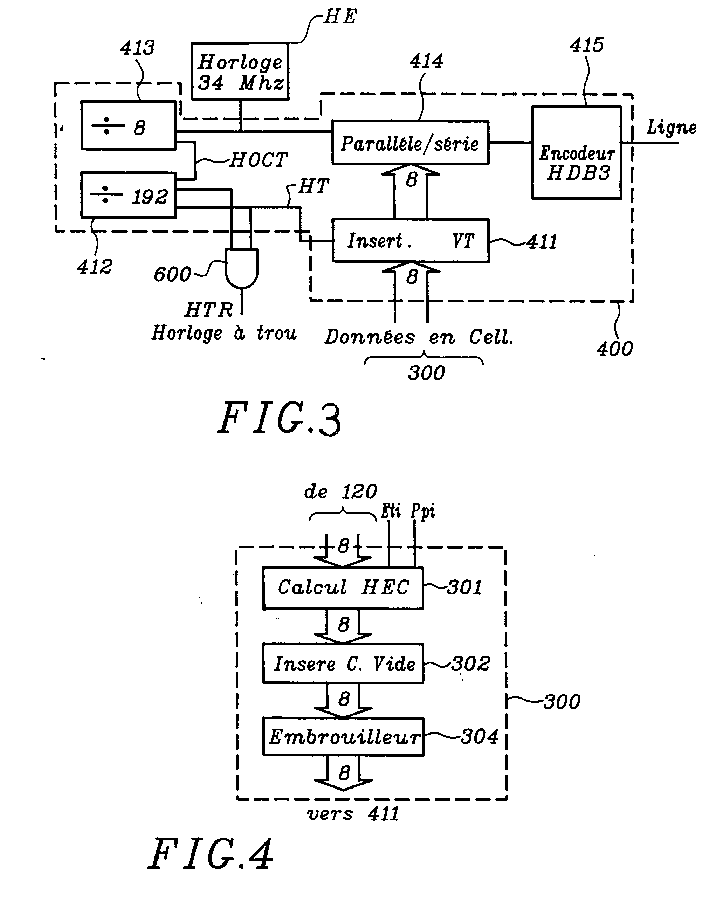

La figure 3 illustre un mode de réalisation de l'ensemble 400 permettant l'insertion du mode de verrouillage de trame et de l'insertion d'erreurs.

Selon l'exemple qui a été pris les cellules ATM sont projetées sur une trame de 192 octets. La trame comprend donc 190 octets d'information dans laquelle se trouve les cellules ATM et 2 octets de verrouillage. Les octets de verrouillage de trame utilisés ont comme valeur hexadécimal F4 et 10 c'est à dire 11110100 00010000, les bits de poids forts sont émis en premier. Afin d'obtenir une structure tramée des données on génère à partir d'un compteur par 192 (portant la référence 412 sur la figure 3) un signal d'horloge du verrouillage de trame HT. On insère au moyen d'un registre 411 à la cadence donnée par l'horloge de trame les mots de verrouillage de trame, ce registre recevant les données des cellules issues de l'ensemble 300. Les mots de 8 bits sortant du registre 411 en parallèle sont sérialisés au moyen d'un convertisseur parallèle-série 414. Le train de données binaires est ensuite encodé par un codeur 415 de type codage HDB3 puis injecté sur la ligne du réseau de transmission.

La figure 4 illustre un mode de réalisation des moyens d'insertion de cellules vides, d'embrouillage et de génération de codes correcteurs d'erreurs ces moyens comportent trois ensembles fonctionnels. Un ensemble de calcul de code correcteurs d'erreur HEC portant la référence 301 reçoit les informations de cellules ATM de l'ensemble de génération de cellules 100. Il reçoit également sur une entrée Eti un signal permanent indiquant l'enveloppe de la cellule. Cette entrée reçoit un signal qui est à 1 durant l'en-tête de la cellule et à 0 durant l'indicateur de type de cellules. L'ensemble 301 comporte également une entrée Bpi qui reçoit un signal à l'état 1 en présence des cellules utilisateurs ou de mesure.

L'ensemble 302 peut être réalisé au moyen d'un registre dans lequel a été enregistré le contenu des cellules vides. Ce contenu correspond à la valeur en hexadécimal pour l'en-tête : 00 00 00 01 52 et à la valeur 6A pour les 48 octets d'informations.

Un embrouilleur synchrone en x³¹ portant la référence 304 est ensuite utilisé pour embrouiller les cellules, les octets de verrouillage n'étant pas embrouillés.

En pratique cet ensemble 300 est réalisé par un circuit de type réseau de cellules logique "LCA" (logic Cell Array).

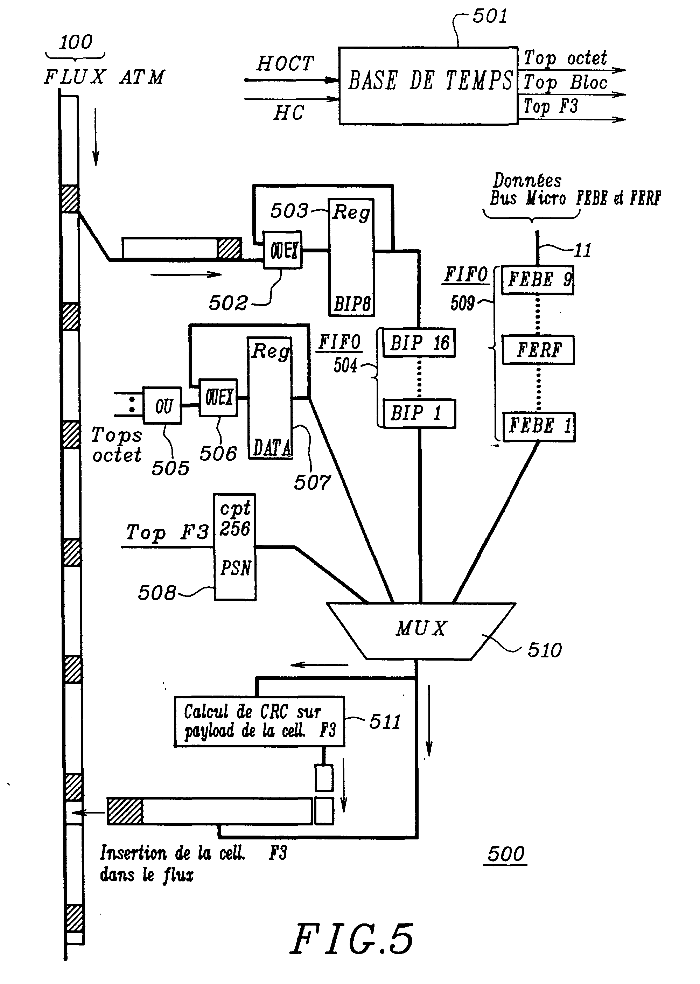

La figure 5 représente l'ensemble 500 permettant de générer des cellules de maintenance F3.

Cet ensemble permet l'émission périodique et forcée d'une cellule F3 toutes les NIC (number of included cells) à titre d'exemple on choisit NIC=256.

L'ensemble permet également de découper ces NIC cellules en NMB blocs de MBS cellules. En pratique on découpe 256 cellules en 16 blocs de 16 cellules.

En effet, on a choisi selon un exemple particulier NMB (Number of Monitored Block)= 16 blocs. MBS (Monitoring Block Size) = 16 cellules.

Conformément à l'invention une cellule de maintenance F3 contient notamment :
- un en-tête particulière permettant de l'extraire du flot de cellules en réception.
   a) un code de détection d'erreurs portant sur le flux binaire d'un bloc de MBS cellules émises (en-tête et champ d'information). Ce code est un BIP8 obtenu par un ou-exclusif, bit à bit, sur les octets et ne porte pas sur les cellules de maintenance F3.
   b) un numéro de séquence PSN de la cellule F3 généré modulo 16.
   c) un nombre de cellules insérées NIC pouvant donner jusqu'à modulo 1024 le nombre de cellules émises depuis la cellule F3 précédente. Ce nombre est modulo 256 dans le cas pris en exemple de 34Mbit/s.
   d) la taille des blocs supervisés coté origine NSB donnant le nombre constant des cellules émises par bloc pour tous les blocs sur lesquels portent les mécanismes de détection d'erreurs (BIP).
   e) le nombre de blocs supervisés à l'origine ONMB donnant le nombre de blocs émis entre deux cellules F3 et sur lesquels portent les mécanismes de détection d'erreurs.
   f) le nombre de blocs supervisés à la destination DNMB donnant le nombre de Block émis sur lesquels portent les informations de viols de parité détectés FEBE.
   g) l'information FEBE ("Far End BLock Error"), information émise vers l'extrémité d'origine associée donnant le nombre de viols de parité détectés en réception via le code Bip8.
   h) l'information FERF ("Far End Receive Failure") information émise vers l'extrémité d'origine associée pour indiquer soit :
      - la perte synchronisation cellule,
      - la perte de flux de maintenance en réception.
   i) tous les octets inutilisés contiennent la valeur hexadécimale 6A.
   j) un code de détection d'erreurs sur le champ d'information de la cellule de maintenance F3. Ce code est un CRC10.

Sur la figure 5 on peut voir l'ensemble des blocs fonctionnels du circuit d'émission de flux de cellules de maintenance F3. Selon un mode de réalisation préféré ce circuit est un circuit de type LCA. Il comporte une base de temps apte à générer les tops octets, les tops blocs et les tops F3 à partir du signal d'horloge octet HOCT et du signal d'horloge HC de présence d'en-tête.

Le flux de cellules issu de l'ensemble 100 est appliqué à l'entrée d'une porte ou-exclusif 502 dont la sortie est appliquée à l'entrée d'un registre 503, la deuxième entrée de la porte 502 recevant la sortie du registre 503. Cet ensemble permet comme cela a déjà été décrit d'obtenir le code correcteur d'erreurs Bip8. Le calcul de Bip8 par bloc de 16 cellules est enregistré dans une pile de type premier-entré/premier-sorti "FIFO" portant la référence 504. La génération des octets fixes d'une cellule de maintenance F3 est obtenue par une porte OU 505 suivie d'une porte logique OU-exclusif 506 et d'un registre 507.

Le numéro de séquence PSN est obtenu à partir d'un compteur par 256 qui reçoit des tops F3. Ce compteur porte la référence 508 sur le schéma.

L'information FEBE est envoyé par l'unité de traitement et arrive par le bus de données de cette unité qui porte la référence 11. Ces informations sont stockées dans une pile de type premier-entre/premier sorti "FIFO" portant la référence 509 sur le schéma. L'information d'une cellule de maintenance F3 est obtenue à la sortie d'un multiplexeur 510 qui reçoit sur ses entrées les données issues du compteur 508, du registre 507, de la pile 504 et de la pile 509.

Un calcul de code correcteur d'erreurs sur l'indicateur de type de la cellule est rajouté dans le champ correspondant à la cellule issue du multiplexeur 510 avant insertion de la cellule dans le flux de cellules ATM.

On rappelle que les cellules utilisateurs sont toutes les cellules émises ou reçues pour la couche ATM c'est à dire toutes les cellules transférées sur la ligne de transmission hors les cellules vides et les cellules du flux de maintenance.

On va voir maintenant de quelle façon sont générées ces cellules utilisateurs. Selon l'invention les cellules utilisateurs correspondent soit à des cellules de mesure qui comportent une information permettant de mesurer le réseau de transfert ATM soit à des cellules de charge. Ce sont des cellules d'informations utilisées pour charger l'accès au réseau. Le contenu des 48 octets d'information des cellules de charge provient d'une mémoire de type RAM. Un compteur 8 bits est utilisé pour charger les 48 octets d'informations des cellules de mesure ce compteur étant incrémenté à chaque cellule de mesure comme on va le voir dans la suite.

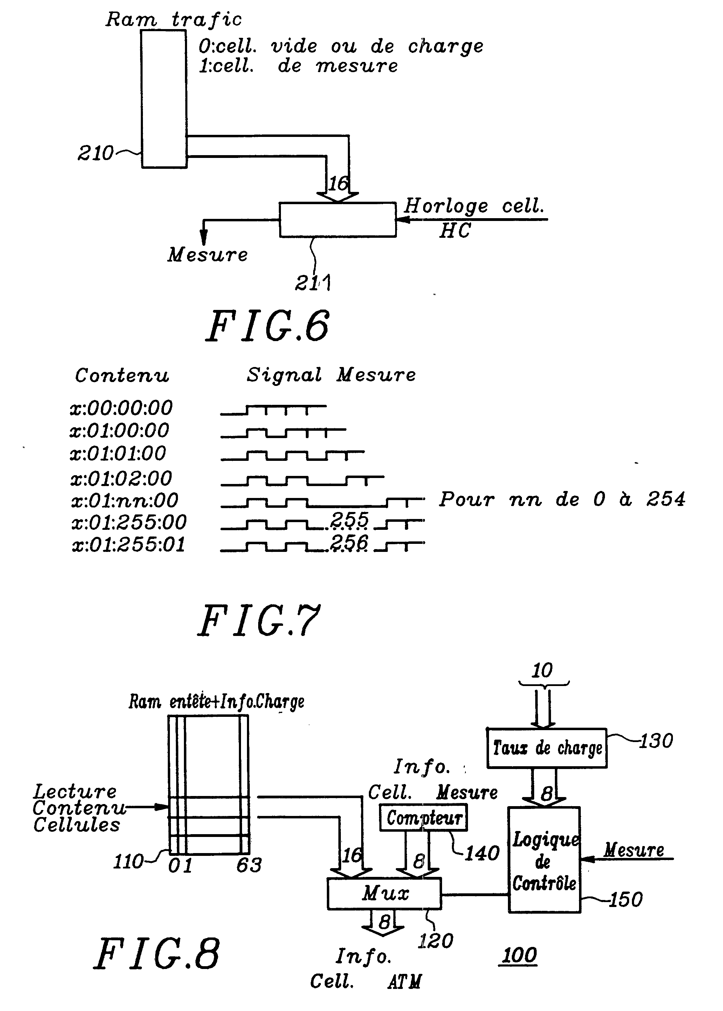

L'émission de cellules vides ou de charge ou de cellules de mesure est pilotée par l'unité de traitement 10 qui commande la lecture d'une mémoire de type RAM que l'on appelle dans la suite RAM trafic portant la référence 210 sur la figure 6.

Cette mémoire comporte un 0 chaque fois qu'une cellule vide ou qu'une cellule de charge doit être émise et un 1 chaque fois qu'il faut: émettre une cellule de mesure.

Selon une première méthode de contrôle du trafic chaque bit de la mémoire de trafic 210 correspond à une cellule de la trame à 34 Mbit/s.

Lorsque le bit est à 0 il n'y pas d'émission de cellules de mesure lorsque le bit est à 1 il y a une émission de cellule de mesure. On peut en outre par programmation des compteurs d'émission permettre d'émettre en mono coup ou en continu avec balayage de la mémoire 210 toutes les 25 secondes environ. La mémoire de trafic des voies virtuelles et des chemins virtuels est accessibles en double accès par le microprocesseur 10 et par l'émetteur.

La figure 6 illustre le procédé mis en oeuvre pour générer le trafic en employant ce codage. Les valeurs sont lues dans la mémoire par 16 bits. Un registre 211 parallèle/série commandé par l'horloge cellule HEC permet de générer une sortie mesure à 1 uniquement pendant la présence d'une cellule de mesure.

Selon une autre méthode pouvant être employée chaque octet de la mémoire de trafic correspond à une distance entre deux cellules de mesure. Lorsque le contenu de la mémoire est égal à 255 le contenu de la mémoire suivante est additionné à 255 pour donner la distance.

La figure 7 illustre la relation entre le contenu de la mémoire et le signal de mesure généré. Le codage selon cette deuxième méthode permet une génération de trafic de durée plus importante.

Dans le débit restant (débit total moins débit alloué VP/VC de mesure) il est possible d'émettre périodiquement des cellules de charge. La période est programmable.

L'émetteur peut émettre soit aucune cellule de charge ou une cellule de charge de 0 à 256 cellules vides. Ce pourcentage de cellules de charge est obtenu par programmation d'un registre 130 à partir de l'unité de traitement 10.

Le contenu du registre de débit de la charge est :
0 ce qui correspond à une charge maximale (pas de cellules vides)
1 ce qui correspond à une cellule vide, une cellule de charge etc...,
2 ce qui correspond à 2 cellules vides, une cellule de charge etc...,
255 ce qui correspond à 255 cellules vides, une cellule de charge etc....

La figure 8 illustre les blocs fonctionnels permettant de générer le flux ATM résultant.

Le signal Mesure indique la présence d'une cellule de mesure, ce signal est généré à partir de la mémoire de trafic comme cela a été expliqué précédemment.

Le champ information de chaque cellule de mesure est rempli par un compteur 140 de 8 bits répété 48 fois. L'en-tête des cellules de mesure est issu de la mémoire 110 ainsi que l'en-tête et le champ information des cellules de charge.

Comme cela a été expliqué l'utilisateur peut, à travers l'unité de traitement 10 programmer le taux de cellules de charge sur le VP/VC choisi. Un circuit logique de contrôle 150 permet d'envoyer le flux ATM sélectionné par les utilisateurs.

La logique de contrôle 150 reçoit pour cela le signal mesure ainsi que le taux de charge du registre 130 et pilote le multiplexeur de manière à ce que les octets issus du compteur ou issus de la mémoire se retrouvent en sortie pour former les cellules ATM.

Les ensembles 100 200 300 et 400 ainsi que l'ensemble 500 représentés sur la figure 2A et qui viennent d'être décrits ont été réalisés au moyen de circuit de type LCA.

**On va maintenant décrire plus en détail la partie récepteur.**

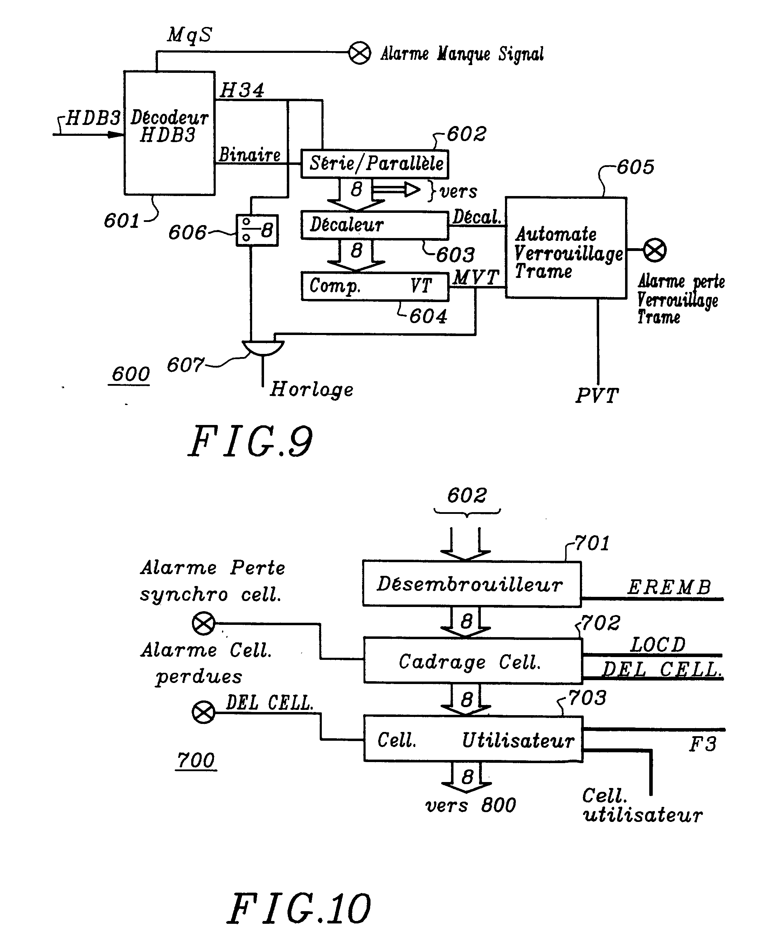

Les moyens de verrouillage de trame représentés sur la figure 2B par le bloc 600 ont été représentés plus en détail sur la figure 9. Ces moyens comportent tout d'abord un décodeur HDB3 qui reçoit le train binaire du support de transmission. Ce décodeur permet le décodage de la trame à 34 Mbits; il permet d'activer une alarme en cas de détection de manque de signal; il permet en outre d'obtenir un signal horloge H34 et un train binaire appliqué à l'entrée d'un convertisseur série/parallèle 602. Le calage octet est obtenu au moyen du convertisseur série/parallèle, d'un décaleur 603, d'un comparateur verrouillage de trame 604 et d'un automate de verrouillage de trame 605.

Le signal d'horloge H34 est appliqué à l'entrée d'un multiplieur par huit portant la référence 606. La sortie du multiplieur et le signal de verrouillage de trame sont appliqués aux entrées d'une porte logique ET 607 pour obtenir le signal Horloge qui va permettre de piloter les autres circuits.

La figure 10 illustre le circuit physique ATM. Il comporte un désembrouilleur 701 qui reçoit les octets issus du convertisseur série/parallèle 602, un circuit de cadrage de cellules 702 et un circuit de reconnaissance de cellules utilisateurs 703. L'ensemble représenté sur la figure 10 a été réalisé au moyen d'un circuit de type LCA et permet d'obtenir des informations de fautes :
- LOCD dans le cas de perte du cadrage de cellules ces informations étant comptées,
- EREMB dans le cas d'erreurs embrouilleurs,
- DELCELL dans le cas de cellules détruites pour codes correcteurs d'erreurs faux.

Le circuit permet en outre d'activer une alarme dans le cas de Perte de Synchronisation de cellules et dans le cas de Cellules Perdues. Il permet également d'envoyer un signal de reconnaissance de cellules utilisateurs et un signal de reconnaissance d'une cellule de maintenance F3.

Le signal indiquant qu'un code correcteurs d'erreurs est erroné permet après comptage du nombre de cellules détruites, de calculer le taux de cellules détruites.

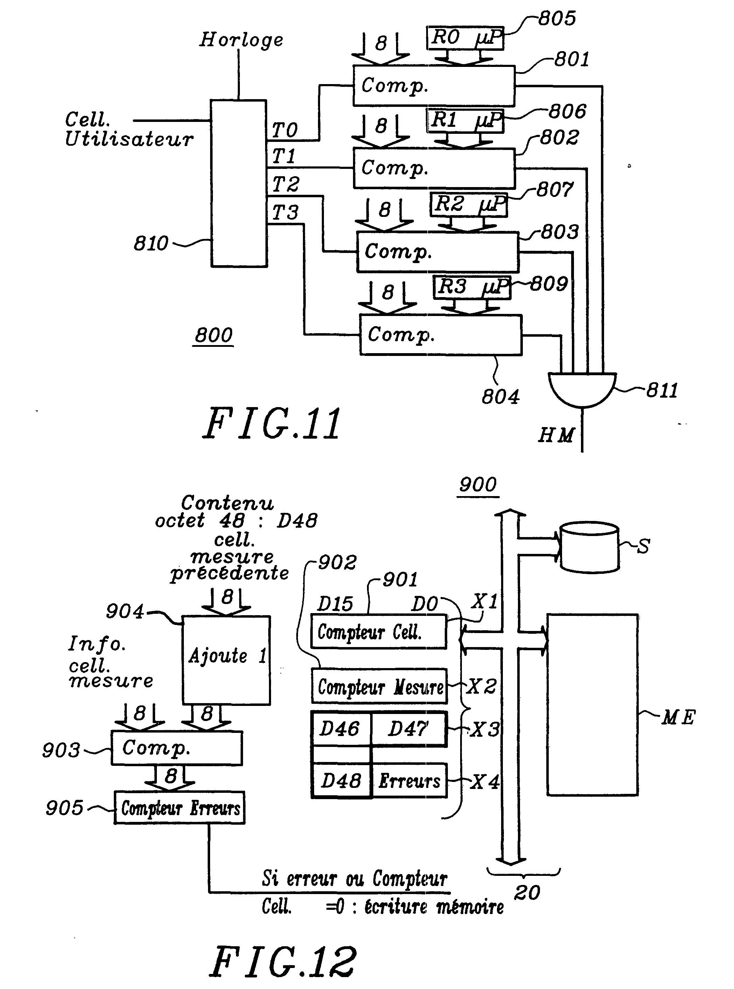

On a représenté sur la figure 11 l'ensemble des blocs fonctionnels nécessaires à la reconnaissance du VP/VC de mesure. Cet ensemble est également réalisé par un circuit de type LCA. La valeur du VP/VC à mesurer est placée dans des registres du circuit LCA et cette valeur est comparée à la valeur du VP/VC reçue au moyen de comparateurs.

Les comparaisons vont porter sur les bits d'en-tête de cellules. On peut prévoir par exemple par programmation qu'un bit à 1 indique que le bit correspondant de l'en-tête pourra prendre une valeur quelconque et qu'un bit à zéro indique que le bit correspondant de l'en-tête sera effectivement comparé au bit correspondant d'un des registres 805 à 809. Une porte logique 811 permet de délivrer un signal HM représentatif du nombre de cellules de mesure reconnues. L'ensemble 900 représenté sur la figure 12 permet de réaliser un traitement des cellules de mesure afin de connaître le taux de cellules perdues insérées et erronées, le nombre de cellules reçues c'est à dire les cellules vides, les cellules de mesure, les cellules de charge. Ce nombre est obtenu au moyen d'un compteur 901 de 16 bits donnant l'information X1 correspondant au numéro de la cellule.

Le nombre de cellules de mesure est obtenu au moyen d'un compteur 902 de 16 bits donnant l'information X2 correspondant au numéro de la cellule de mesure. Ces informations X1 X2 sont mémorisées dans une mémoire de type RAM à double accès 950.

Quatre autres octets sont également mémorisés. IL s'agit de l'octet D48 de la partie information de la cellule reçue, de l'octet D47 de la partie information de la cellule reçue, de l'octet D48 de la partie information de la cellule reçue et de la sortie d'un compteur 8 bits comptant des erreurs sur les octets d'informations le comptage étant arrêté lorsque le nombre d'erreurs atteint 255.

L'information X3 mémorisée dans la mémoire 950 correspond aux octets D46 D47 D48 et l'information X4 correspond aux nombres d'erreurs obtenus par le compteur. Ces 8 octets sont stockés dans la mémoire 950 lorsque le compteur d'erreurs est différent de 0 ou lorsque le compteur de cellules a atteint la valeur 65 365.

La mémoire est gérée en double accès. L'unité centrale 30 peut traiter la mémoire en temps réel, compresser les données et périodiquement sauvegarder en mémoire de masse S les informations acquises pour un traitement différé.

Les informations stockées en mémoire vive 950 puis en mémoire de masse S permettent de compter et de dater tous les événements apparus sur un conduit ATM. On peut à partir des informations X1 X2 X3 X4 calculer le nombre de cellules insérées perdues et erronées. Pour obtenir le calcul d'erreurs dans une cellule reçue on dispose d'un comparateur 8 bits 903 qui compare les valeurs de 8 bits issus du champ d'information de la cellule de mesure reçue avec la valeur de 8 bits issue du registre additionneur 904. Ce registre additionneur contient la valeur contenu dans le champ information de la cellule précédente incrémenté de 1.

Le résultat de chaque comparaison est transféré vers un additionneur 905 exécutant un comptage d'erreurs. Le nombre d'erreurs est obtenu au bout de 48 comparaisons pour les cellules ayant 48 octets d'informations. Pour obtenir la mesure de gigue on analyse la variation de la distance entre cellules de mesure, information contenue dans la mémoire de trafic 850.

Pour obtenir le temps de transfert du réseau on prévoit d'envoyer une cellule spécifique dans le réseau dont l'en-tête est reconnaissable, cette cellule est également enregistrée dans la mémoire 950. On réalise un test en boucle c'est à dire que l'on émet la cellule dans un réseau bouclé comme le montre le schéma de la figure 1Aa. A la réception la cellule est stockée dans la mémoire 950, on connaît alors la distance en cellule entre l'émission de cellules spécifiques et sa réception. On en déduit le temps de transfert du réseau. On pourra se reporter à la description détaillée des moyens de traitement de cellules de mesure qui a été faite dans la demande de brevet déposée sous le numéro 93 01736 par la demanderesse et publiée sous le numéro FR-A-2 701 618.

## Revendications

1. Appareil de test de réseau et/ou d'éléments de réseau de télécommunication de type ATM et de mesure de performance de connexion du réseau, ce réseau véhiculant des informations sous la forme de cellule conforme à la norme ATM, **caractérisé en ce qu'**il comprend :
A. Un émetteur (ET) muni de :
a) d'un ensemble d'élaboration de conduit physique (100, 300, 500) cet ensemble comprenant :
- des moyens d'embrouillage de cellules,
- des moyens de génération de codes correcteurs d'erreurs,
- des moyens de génération de cellules de maintenance,
- des moyens d'insertion d'erreurs;
b) d'un ensemble d'élaboration de la couche de transport ATM (100, 200) organisé en chemins virtuels et voies virtuelles (VP/VC) comprenant :
- des moyens de génération du flux de cellules utilisateurs incluant des cellules de mesure et des cellules de charge,
- des moyens de formation d'un flux de cellules à partir des cellules générées, par multiplexage temporel sur plusieurs niveaux organisés en A circuits virtuels et voies virtuelles de mesure et B circuits virtuels et voies virtuelles de charge;
B. Un récepteur (RP) muni :
a) d'un ensemble de traitement des signaux de la couche physique (600) comprenant :
- des moyens de détection du manque de signal, de perte de signaux de synchronisation trame et de perte de signaux de synchronisation cellules,
b) d'un ensemble de traitement de flux de cellules de la couche de transport ATM (700, 200, 900) comprenant :
- des moyens de désembrouillage et de cadrage de cellules,
- des moyens de reconnaissance de cellules de mesure,
- des moyens de reconnaissance de cellules de charge,
- des moyens de mesure de performance (cellules erronées, perdues, insérées, gigue) et de stockage de cellules.

2. Appareil de test selon la revendication 1 **caractérisé en ce que** l'émetteur comporte des moyens de formation d'une trame (HE, 20, 450, 400) composée de N octets dont (N-M) octets d'information et M octets de verrouillage de trame.

3. Appareil de test selon la revendication 2 **caractérisé en ce que** les moyens de formation de trame comportent un compteur (450)permettant de réaliser une horloge à trou (HTR) pour l'insertion des M octets de verrouillage de trame tous les N octets.

4. Appareil de test selon la revendication 2 **caractérisé en ce que** les moyens de formation de trame comportent en outre des moyens de transformation parallèle-série (414) pour émettre les octets formant les cellules sous la forme série et un encodeur (415) permettant de coder les bits série pour les émettre sur la ligne de transmission du réseau.

5. Appareil de test selon les revendications 1 et 2 **caractérisé en ce que** les moyens d'embrouillage (300) des cellules sont réalisés par un embrouilleur synchrone en x³¹, les octets de verrouillage de trame n'étant pas embrouillés.

6. Appareil de test selon la revendication 1 **caractérisé en ce que** les moyens d'élaboration du conduit physique comportent des moyens d'insertion de cellules vides (302).

7. Appareil de test selon les revendications 1 et 6 **caractérisé en ce que** les moyens (300) de calcul de code correcteur d'erreur, les moyens d'embrouillage et les moyens d'insertion de cellules vides sont réalisés par un circuit par un réseau de cellules logiques.

8. Appareil de test selon la revendication 1 **caractérisé en ce que** les moyens (100) permettant la génération de flux de cellules de mesure et de charge sont associés à une mémoire programmable (110) contenant un premier ensemble de blocs chaque bloc contenant les octets d'en-tête et d'information des cellules de charge et un deuxième ensemble contenant les en-têtes des cellules de mesure.

9. Appareil de test selon la revendication 1 **caractérisé en ce que** les moyens de génération du flux de cellules de mesure et de charge (100) comprennent en outre un compteur (140) dont la valeur est répétée dans chaque octet d'une cellule, le compteur étant incrémenté de 1 à chaque nouvelle cellule à générer.

10. Appareil de test selon la revendication 1 **caractérisé en ce que** les moyens de génération du flux de cellules ATM comprennent en outre des moyens de génération du trafic (200, 210).

11. Appareil de test selon la revendication 10 **caractérisé en ce que** les moyens de génération de trafic comportent une mémoire programmable (210) dans laquelle chaque bit correspond à une cellule de la trame et dont l'état 0 ou 1 va permettre ou non de commander l'émission d'une cellule de mesure.

12. Appareil de test selon la revendication 10 **caractérisé en ce que** les moyens de génération de trafic comportent une mémoire programmable (110) dans laquelle chaque octet correspond à une distance entre deux cellules de mesures.

13. Appareil de test selon la revendication 1 **caractérisé en ce que** les moyens de génération (500) de cellules de maintenance (F3) comportent :
- une base de temps (301) pour obtenir des signaux de synchronisation d'octets, de synchronisation de blocs et de synchronisation de cellules F3 permettant l'émission périodique et forcée d'une cellule de maintenance F3 toutes les NIC cellules émises,
- des moyens de génération de l'en-tête des cellules de maintenance et du champ d'information (502-511).

14. Appareil de test selon la revendication 1 **caractérisé en ce que** le récepteur (RP) comporte des moyens de verrouillage de trame et de transformation série parallèle (600).

15. Appareil de test selon la revendication 14 **caractérisé en ce que** les moyens de verrouillage de trame comportent un circuit de décodage de trame (601) comprenant un décodeur permettant d'obtenir un signal binaire, un convertisseur série-parallèle (602), un décaleur (603), un automate de verrouillage de trame (605) et un comparateur de mots de verrouillage de trame (604).

16. Appareil de test selon la revendication 14 **caractérisé en ce que** les moyens de reconnaissance de cellules de mesure (800) comportent des comparateurs permettant de comparer les cellules utilisateurs reçues aux en-têtes des cellules de mesure.

17. Appareil de test selon la revendication 14 **caractérisé en ce que** les moyens de mesure de performance et de stockage de cellules (900) comportent un ensemble de traitement des cellules de mesure apte à compter les cellules insérées, perdues et le nombre d'erreurs détectées sur les cellules erronées.

18. Appareil de test selon la revendication 14 **caractérisé en ce que** le récepteur (RP) comporte en outre une mémoire (950)permettant de lire en temps réel les résultats de mesure, de les stocker en mémoire de masse(s) et d'analyser le trafic reçu.

19. Appareil de test selon la revendication 14, **caractérisé en ce que** la mémoire (950) permet de stocker les cellules reçues en les filtrant si nécessaire en vue d'un traitement différé (analyse de protocole, maintenance).

## Patentansprüche

1. Prüfungsgerät für das ATM-Telekommunikationsnetz und/oder für ATM-Telekommunikationsnetzelemente und zum Messen der Netzverbindungsleistung, wobei dieses Netz Informationen bzw. Daten in Form von Zellen überträgt, die der ATM-Norm entsprechen,
**dadurch gekennzeichnet, dass** es umfasst:
A. Einen Sender (ET), ausgestattet mit:
a) eine Einheit zur Herstellung bzw. Verarbeitung des physischen Kanals (100, 300, 500), wobei diese Einheit umfasst:
- Zellenverwürfelungseinrichtungen,
- Fehlerkorrekturcode-Erzeugungseinrichtungen,
- Unterhaltszellen-Erzeugungseinrichtungen,
- Fehlereinführungseinrichtungen;
b) einer Verarbeitungseinheit der ATM-Übertragungsschicht (100, 200), organisiert in virtuelle Wege und virtuelle Kanäle (VP/VC), umfassend:
- Einrichtungen zur Erzeugung des Nutz- bzw. Benutzerzellenflusses einschließlich Messzellen und Ladungszellen,
- Einrichtungen zur Bildung eines Zellenflusses aus Zellen, erzeugt durch Zeitmultiplex auf mehreren Ebenen, organisiert in A virtuelle Messkreise und virtuelle Messkanäle und B virtuelle Ladungskreise und virtuelle Ladungskanäle;
B. Einen Empfänger (RP), ausgestattet mit:
a) einer Verarbeitungseinheit der Signale der physischen Schicht (600), umfassend:
- Detektionseinrichtungen der Signalabwesenheit, des Blocksynchronisationssignal-Verlusts und des Zellensynchronisationssignal-Verlusts,
b) einer Verarbeitungseinheit des Zellenflusses der ATM-Übertragungsschicht (700, 200, 900), umfassend:
- Einrichtung zum Entwürfeln und Rahmen der Zellen,
- Einrichtungen zum Erkennen der Messzellen,
- Einrichtungen zum Erkennen der Ladungszellen,
- Einrichtungen zur Leistungsmessung (fehlerhafte, verlorene, eingefügte und Jitter-Zellen) und zur Speicherung von Zellen.

2. Prüfgerät nach Anspruch 1, **dadurch gekennzeichnet, dass** der Sender Einrichtungen zur Bildung eines Blocks (HE, 20, 450, 400) umfasst, gebildet durch N Bytes, davon (N-M) Informationsbytes und M Blockverriegelungsbytes.

3. Prüfgerät nach Anspruch 2, **dadurch gekennzeichnet, dass** die Blockbildungseinrichtungen einen Zähler (450) umfassen, der ermöglicht, einen Lochtakt (HTR) zum Einfügen der M Blockverriegelungs-Bytes alle N Bytes zu realisieren.

4. Prüfgerät nach Anspruch 2, **dadurch gekennzeichnet, dass** die Blockbildungseinrichtungen außerdem Parallel-Serien-Umwandlungseinrichtungen (414) umfassen, um die die Zellen bildenden Bytes in Serienform zu senden, und einen Codierer (415), der ermöglicht, die Serienbits zu codieren, um sie auf der Übertragungsleitung des Netzes zu senden.

5. Prüfgerät nach den Ansprüchen 1 und 2, **dadurch gekennzeichnet, dass** die Verwürfelungseinrichtungen (300) der Zellen durch einen synchronen x³¹-Verwürfler gebildet werden, wobei die Blockverriegelungs-Bytes nicht verwürfelt werden.

6. Prüfgerät nach Anspruch 1, **dadurch gekennzeichnet, dass** die Einrichtungen zur Herstellung bzw. Verarbeitung des physischen Kanals Leerzelleneinfügungseinrichtungen (302) umfassen.

7. Prüfgerät nach den Ansprüchen 1 und 6, **dadurch gekennzeichnet, dass** die Fehlercodekorrektur-Recheneinrichtungen (300), die Verwürfelungseinrichtungen und die Leerzelleneinfügungseinrichtungen durch eine Schaltung durch ein Netz logischer Zellen realisiert werden.

8. Prüfgerät nach Anspruch 1, **dadurch gekennzeichnet, dass** die Einrichtungen (100), die die Erzeugung des Mess- und Ladungszellenflusses ermöglichen, mit einem programmierbaren Speicher (110) verbunden sind, der eine erste Gruppe von Blöcken enthält, wobei jeder Block die Kopf- und Informations-Bytes der Ladungszellen enthält und eine zweite Gruppe die Kopfteile der Messzellen enthält.

9. Prüfgerät nach Anspruch 1, **dadurch gekennzeichnet, dass** die Einrichtungen zur Erzeugung des Mess- und Ladungszellenflusses (100) außerdem einen Zähler (140) umfassen, dessen Wert in jedem Byte einer Zelle wiederholt wird, wobei der Zähler bei jeder neu zu erzeugenden Zelle um 1 inkrementiert wird.

10. Prüfgerät nach Anspruch 1, **dadurch gekennzeichnet, dass** die Einrichtungen zur Erzeugung des ATM-Zellenflusses außerdem Einrichtungen zur Erzeugung des Verkehrs (200, 210) umfassen.

11. Prüfgerät nach Anspruch 10, **dadurch gekennzeichnet, dass** die Verkehrserzeugungseinrichtungen einen programmierbaren Speicher (210) umfassen, in dem jedes Bit einer Zelle des Blocks entspricht und dessen Zustand 0 oder 1 ermöglicht oder nicht ermöglicht, das Senden einer Messzelle zu befehlen.

12. Prüfgerät nach Anspruch 10, **dadurch gekennzeichnet, dass** die Verkehrserzeugungseinrichtungen einen programmierbaren Speicher (110) umfassen, in dem jedes Byte einem Abstand zwischen zwei Messzellen entspricht.

13. Prüfgerät nach Anspruch 1, **dadurch gekennzeichnet, dass** die Einrichtungen (500) zur Erzeugung von Unterhaltszellen (F3) umfassen:
- eine Zeitbasis (301), um Bytes-Synchronisations-, Blöckesynchronisations- und Zellensynchronisationssignale F3 zu erhalten, die das periodische und zwangsläufige Senden einer Unterhaltszelle F3 nach jeweils NIC gesendeten Zellen ermöglichen,
- Erzeugungseinrichtungen des Kopfteils der Unterhaltszellen und des Informationsfelds (502-511).

14. Prüfgerät nach Anspruch 1, **dadurch gekennzeichnet, dass** der Empfänger (RP) Einrichtungen (600) zur Blockverriegelung und Serien-Parallel-Umsetzung umfasst.

15. Prüfgerät nach Anspruch 14, **dadurch gekennzeichnet, dass** die Blockverriegelungseinrichtungen eine Block-Decodierschaltung (601) enthalten, die einen Decodierer umfasst, der ermöglicht, ein binäres Signal zu erhalten, sowie einen Serien-Parallel-Umsetzer, einen Schieber (603), einen Blockverriegelungsautomaten (605) und einen Blockverriegelungswörter-Komparator (604).

16. Prüfgerät nach Anspruch 14, **dadurch gekennzeichnet, dass** die Messzellen-Erkennungseinrichtungen (800) Komparatoren umfassen, die ermöglichen, die in den Köpfen der Messzellen empfangenen Nutz- bzw. Benutzererzellen zu vergleichen.

17. Prüfgerät nach Anspruch 14, **dadurch gekennzeichnet, dass** die Einrichtungen zur Leistungsmessung und Zellenspeicherung (900) eine Messzellenverarbeitungseinheit umfassen, fähig die eingefügten, verlorenen Zellen und die Anzahl der bei den fehlerhaften Zellen detektierten Fehler zu zählen.

18. Prüfgerät nach Anspruch 14, **dadurch gekennzeichnet, dass** der Empfänger (RP) außerdem einen Speicher (950) umfasst, der ermöglicht, in Echtzeit die Messresultate zu lesen, sie im (in) Massespeicher(n) abzuspeichern und den empfangenen Verkehr zu analysieren.

19. Prüfgerät nach Anspruch 14, **dadurch gekennzeichnet, dass** der Speicher (950) ermöglicht, die empfangenen Zellen abzuspeichern, indem sie, wenn nötig, hinsichtlich einer abweichenden bzw. anderen Verarbeitung (Protokollanalyse, Unterhalt) gefiltert werden.

## Claims

1. Testing apparatus for a telecommunications network and/or network elements of the ATM type and for measuring network connection performance, this network conveying data in cell form in accordance with the ATM standard, **characterised by** the fact that it comprises:
A. A transmitter (ET) provided with:
a) an assembly for creating a physical path (100, 300, 500) this assembly comprising:
- means for scrambling cells,
- means for generation of error correction codes,
- means for generation of maintenance cells,
- means for insertion of errors;
b) an assembly for creating the ATM transport layer (100, 200) organised in virtual paths and virtual channels (VP/VC) comprising:
- means for generating the stream of user cells including measurement cells and charge cells,
- means for forming a stream of cells from the generated cells by time multiplexing on a plurality of levels organised in A virtual circuits and virtual measurement channels and B virtual circuits and virtual charge channels;
B. A receiver (RP) provided:
a) with an assembly for processing the signals of the physical layer (600) comprising:
- means for detecting absence of signal, loss of frame synchronisation signals and loss of cell synchronisation signals,
b) with an assembly for processing a stream of cells of the ATM transport layer (700, 200, 900) comprising:
- meahs for descrambling and framing cells,
- means for recognising measurement cells,
- means for recognising charge cells,
- means for measurement of performance (erroneous, lost, inserted, jitter cells,) and for storage of cells.

2. Testing apparatus as described in claim 1, **characterised by** the fact that the transmitter includes means for forming a frame (HE, 20, 450, 400) composed of N bytes of which (N-M) are data bytes and M are frame locking bytes.

3. Testing apparatus as described in claim 2, **characterised by** the fact that the means for frame formation include a counter (450) permitting creation of a hole clock (HTR) for insertion of M locking bytes every N bytes.

4. Testing apparatus as described in claim 2, **characterised by** the fact that the means for frame formation also include means for parallel-series transformation (414) to transmit the bytes forming the cells in series form and an encoder (415) to code the series bits to transmit them over the network transmission line.

5. Testing apparatus as described in claims 1 and 2, **characterised by** the fact that the cell scrambling means (300) are formed by an x³¹ synchronous scrambler, the frame locking bytes not being scrambled.

6. Testing apparatus as described in claim 1,
**characterised by** the fact that the means for creating the physical path include means for insertion of empty cells (302).

7. Testing apparatus as described in claims 1 and 6, **characterised by** the fact that the means (300) for calculation of error correction code, the scrambling means and the means for insertion of empty cells are formed by a circuit through a network of logical cells.

8. Testing apparatus as described in claim 1, **characterised by** the fact that the means (100) allowing the generation of the stream of measurement and charge cells are associated with a programmable memory (110) containing a first assembly of blocks each block containing the header and data bytes of the charge cells and a second assembly containing the headers of the measurement cells.

9. Testing apparatus as described in claim 1, **characterised by** the fact that the means for generation of the stream of measurement and charge cells (100) also comprise a counter (140) the value of which is repeated in each byte of a cell, the counter being incremented by 1 at each new cell to be generated.

10. Testing apparatus as described in claim 1, **characterised by** the fact that the means for generation of the stream of ATM cells also comprise means for traffic generation (200, 210).

11. Testing apparatus as described in claim 10, **characterised by** the fact that the means for traffic generation include a programmable memory (210) in which each bit corresponds to a cell of the frame and the 0 or 1 state of which will allow or otherwise an instruction for transmission of a measurement cell.

12. Testing apparatus as described in claim 10, **characterised by** the fact that the traffic generation means include a programmable memory (110) in which each byte corresponds to a distance between two measurement cells.

13. Testing apparatus as described in claim 1, **characterised by** the fact that the means for generation (500) of maintenance cells (F3) include:
- a time base (301) to obtain signals for synchronisation of bytes, synchronisation of blocks and synchronisation of F3 cells allowing periodic and forced transmission of an F3 maintenance cell every NIC cells transmitted,
- means for generating the header of the maintenance cells and the data field (502-511).

14. Testing apparatus as described in claim 1, **characterised by** the fact that the receiver (RP) includes means for frame locking and series parallel transformation (600).

15. Testing apparatus as described in claim 14, **characterised by** the fact that the frame locking means include a frame decoding circuit (601) comprising a decoder allowing a binary signal to be obtained, a series-parallel converter (602), a shifter (603), a frame locking state machine (605) and a frame locking word comparator(604).

16. Testing apparatus as described in claim 14, **characterised by** the fact that the means for recognising measurement cells (800) include comparators allowing comparison of the user cells received with the headers of the measurement cells.

17. Testing apparatus as described in claim 14, **characterised by** the fact that the means for measurement of performance and storage of cells (900) include an assembly for processing of the measurement cells able to count the inserted and lost cells and the number of errors detected in the erroneous cells.

18. Testing apparatus as described in claim 14, **characterised by** the fact that the receiver (RP) also includes a memory (950) permitting the reading of the measurement results in real time, their storage in mass storage(s) and analysis of the traffic received.

19. Testing apparatus as described in claim 14, **characterised by** the fact that the memory (950) permits storage of the cells received while filtering them if necessary for differed processing (protocol analysis, maintenance).
